(19) Europäisches Patentamt / European Patent Office / Office européen des brevets

(11) **EP 2 749 417 A1**

(12) # EUROPEAN PATENT APPLICATION

(43) Date of publication:
**02.07.2014 Bulletin 2014/27**

(51) Int Cl.:
**B41F 33/00** *(2006.01)* **G06K 19/06** *(2006.01)*

(21) Application number: **12386025.6**

(22) Date of filing: **28.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **P. Dimitropoulos - Electronic Systems and Software Applications S.A.**
**Trading Name: SENSAP SA**
**18346 Moschato/Athens (GR)**

(72) Inventor: **Panagiotis, Dimitropoulos D.**
**14564 Kifissia/ Athens (GR)**

(54) **Quality control, method and device in production lines of solid and corrugated carton boxes, and advertising displays made of paper**

(57)     Quality control method in production lines of solid and corrugated carton boxes and advertising displays made of paper, such lines comprising printing, die-cutting and folding/gluing machines of the paper products (1) being produced. The method comprises photographing with digital cameras colored two-dimensional barcode symbols of the DATAMATRIX type (17) printed within the margin of the printing layout of each sheet of paper, contained within the frame (32) of photographs taken and decoding with an appropriate computational system the colored two-dimensional barcode symbols of the DATAMATRIX type in the photographs taken and comparing them with standard codes in order to ascertain the printing fidelity of the constituent colors of the authentic colored image, the degree of alignment between the monochrome, individual images making up the colored image of the paper product (1) being produced, and further the alignment of the printing layout imprinted in each printed sheet of paper with the relevant predetermined linear pattern of die-cutting the paper product (1) being produced.

**Fig. 14**

**Description**

**THE FIELD OF THE ART**

The present invention discloses a photographic method of measuring quality parameters in paper packaging products, namely in solid and in all kinds of corrugated carton boxes for packaging food, beverages, pharmaceuticals, cosmetics and cigarettes and in advertising stands and displays made of paper, such quality parameters characterizing the degree of conformance to a certified standard of the printing and die-cutting processes, in which a raw material of sheets of solid or corrugated, primary or recycled, single or multiple, bleached or coloured paper are being processed into these products in automatic or non-automatic printing machines (lithography, rotogravure) and in die-cutting machines respectively. The device employed in the implementation of the disclosed method, on the one hand checks the fidelity of printing of the constituent colours of the authentic coloured image and the degree of alignment of the monochrome, individual constituent images that make up the same as being attained during lithographic or rotogravure paper printing processes and on the other hand it checks the degree of alignment of the printing layout as imprinted in each sheet of paper being printed with the relevant linear pattern of cutting and forming the paper packaging product as such is being implemented in the process of paper cutting and forming in a die-cutting machine employing a paper die-cutting die. The device implementing the method being disclosed herein performs the abovementioned checks by photographing, decoding and comparing with standard codes, two-dimensional coloured barcode symbols of the DATAMATRIX type, as well as by measuring the coordinates of the geometric center or of a point on the contour thereof on the basis of a reference system defined for each photograph being taken. These two-dimensional coloured barcode symbols are being printed on the sidelines of the printing layout, onto a white background, invisible to the end user/consumer and preferably along the gluing zone of the paper packaging product and are being photographed, sequentially or simultaneously, as printed sheets pass through printing machines (lithography, rotogravure) or through die-cutting machines or as paper packaging product units pass through carton folding/gluing machines by one or more digital cameras that are mounted on these machines, wherein such digital cameras constitute together with the arrangements triggering photographing, the system of decoding of such barcode symbols, of comparing them with standard codes and of calculating the position of the symbols on each photo being taken and together with the electromechanical equipment of supporting and providing a power supply to the above and the electronic infrastructure of digital networking thereof, the quality control device disclosed herein.

**THE PRIOR ART**

During a lithographic or a rotogravure printing process, the authentic colored image is being composed with sequential printing of multiple - usually four or six - monochrome, individual images obtained through analysis (separation) of the original, monochrome colored image into its composite colors. Printing of each monochrome individual image is being implemented in a separate tower of the printing machine with point ink transfer from the ink container of this printing press tower onto the sheet of paper being printed via appropriate printing tools (lithographic plates, rotogravure cylinders), such ink transfer being characterized by the spot color density being determined as $D_C(x - x_C\, y - y_C)$, i.e. the percentage of the incremental area at every point of the sheet being printed that is covered by ink, wherein $(x\, y)$ is the set of points that define the area of the paper being printed and $(x_C\, y_C)$ is the point of reference of each printing press tower, say $C$, of the printing machine. The spot color density is being determined by the printing tool (lithographic plate, rotogravure cylinder) being used in each tower of the printing machine, wherein such tool is being prepared during the process of analysis (separation) of the authentic colored image into its monochrome composite colours and is being affected by a plurality of printing parameters, such as: a) the pressure being exerted by the tool onto the sheet of paper, b) the caliper of that sheet of paper, which is expected to deviate from its theoretical specification at a percentage of around five per cent (5%), c) the flow of ink from the ink container to the paper sheet, which is being regulated along the axial displacement of the sheet of paper, through an arrangement of taps (ink container keys), d) the color of the paper sheet which - typically - deviates from the absolute white that is assumed during the analysis procedure of the authentic colored image into its monochrome individual components, and e) the physical, chemical properties of the ink itself, which are drastically affected by the volumetric content of water or solvent, wherein such content may be varied in a stochastic manner, during the printing process as a factor of process defect.

The printing fidelity of the authentic colored image onto the paper sheet being printed during the aforementioned lithographic or rotogravure printing process, depends both on the degree of compliance of the spot color density of each monochrome constituent image, $D_C$, with the theoretical specification thereof, $D_{TC}$, as such is being calculated theoretically during the procedure of analysis (separation) of the authentic colored image into its monochrome, individual components and also on the degree of alignment of the monochrome, individual images, which is equivalent to the degree of coincidence of the points of reference $(x_C\, y_C)$ of each tower of the printing machine. Specifically, the deviation of the spot color density $D_C$ of each monochrome, individual image from the theoretical specification thereof, appears in the authentic colored image as discoloration within limited or extensive areas of the sheet being printed, whilst the imperfect alignment of the monochrome, individual images causes both generalized discoloration and also reduces the sharpness of the authentic colored image (Blur effect). At the start of the lithographic or rotogravure printing process, the operator of the respective printing machines, aided by technical means, the description of which extends beyond the scope of the present, regulates the abovementioned printing parameters and aligns the towers of the printing machine with a scope of optimization of the fidelity of printing of the authentic colored image onto the sheet of paper being printed, i.e. with a scope of minimization of the difference $D_C$ - $D_{TC}$ of the actual from the theoretical spot color density at each point $(x\ y)$ of the sheet being printed and the equation of the points of reference $(x_1\ y_1) \doteq (x_2\ y_2) \cdots (x_C\ y_C) \doteq (x_o\ y_o)$ of the towers of the printing machine. Because of variability of: a) the caliper of the sheet being printed, b) the physical, chemical properties of the ink, which are affected by the stochastic content of water or solvent and c) the variability (tolerance) in the alignment of the towers of the printing machine, as well as because of other case-specific factors, the fidelity of printing of the authentic colored image on different sheets of paper is variable and can be degraded in a stochastic or systematic manner at an extent that may exceed the quality limits being set in the relevant specifications of the paper packaging products being produced, thereby consequently causing rejection of the relevant defective product units.

After the process of lithographic or rotogravure printing and other special, if necessary, finishing processes of printed sheets of paper has been terminated, the die-cutting process is being performed in which said printed sheets are being processed in a die-cutting machine, automatic or not, which is being provided with a die-cutting die by means of which the printed sheets of paper raw material are being processed into the abovementioned paper packaging products, i.e. into solid and corrugated carton boxes for packaging food, beverages, pharmaceuticals, cosmetics and cigarettes and advertising paper stands and displays. The alignment of the printing layout, as imprinted in each printed sheet of paper with the related linear pattern of die-cutting the paper packaging product is being regulated through appropriate means of alignment (comers) of the die-cutting machine in the corresponding tower thereof, upon initiation of the die-cutting process and in a manner such that the point of reference, say $(x_D\ y_D)$ of each tower of the die-cutting machine may coincide with the respective points of reference of the related towers of the printing machine, i.e. $(x_D\ y_D) \doteq (x_1\ y_1) \doteq (x_2\ y_2) \cdots (x_C\ y_C) \doteq (x_o\ y_o)$. The degree of alignment of the printing layout with the associated linear pattern of die-cutting, i.e. the degree of coincidence of the above points of reference of the related towers of the printing and die-cutting machines is a measure of the quality being achieved in the die-cutting process. Because of the variability (tolerances) in the alignment of the die-cutting tower in the die-cutting machine, as well as because of other, case-specific factors, the alignment of the printing layout with the relevant linear pattern of die-cutting of the product in different paper sheets, is also variable and can be downgraded, in a stochastic or in a systematic manner, at such an extent that it may exceed the quality limits that have been set by the relevant specifications of the paper packaging products being produced, thereby consequently causing rejection of the relevant defective product units.

To address the problem disclosed hereinabove of the variability presented on the one hand in the printing quality, i.e. the authenticity in imprinting of the authentic colored image in different sheets of paper and on the other hand in the quality of die-cutting, i.e. the alignment of the printing layout with the relevant linear pattern of die-cutting of the product into different sheets of paper, the known state of the art provides methods and devices for the implementation thereof, which achieve on the one hand the automatic detection of paper packaging product units, the quality of which - in accordance with the definitions provided hereinabove - exceeds the limits set in the relevant specifications and on the other hand the activation of automatic control systems in order to issue alerts, and - where appropriate - lead to rejection or marking of defective products. The detection and rejection is being preferably performed, according to the state of the prior art, in the production phase of the folding/gluing of the paper packaging products, which typically constitutes the last machining step of these products, by means of printing, in a direction parallel to the axial movement of the paper packaging product units being supplied to the folding/gluing machine, colored or monochrome - preferably black - symbols of a one-dimensional barcode of the PHARMACODE type, as well as other colored or monochrome - preferably black - symbols of a triangular or rectangular shape, along the sidelines of the printing layout, within a zone of white background, invisible to the end user/consumer and - preferably - along the gluing zone of the paper packaging product, which symbols are being detected by one or - where appropriate - more photocells located at appropriate points of the folding/gluing machine, which constitute part of the quality control thereof. The colored symbols typically comprise one of the colored components of the authentic colored image to be printed.

Specifically, each paper packaging product unit being led to the folding/gluing process, is being scanned during movement thereof within the folding/gluing machine, by one or - if applicable - more constant beams of light, preferably laser with a typically different wavelength emitted by the transmitters of equivalent photocells provided in the quality control means of the folding/gluing machine, such beams being reflected onto the white background of the symbols printed along the gluing zone of the paper packaging product and being detected by the respective photocell receivers so as to produce at the output of the latter, an electrical signal consisting of a pulse train, whose length and relative position in relation to the beginning of this electrical signal depend on the speed of the unit being scanned and the dimensions and positions of these symbols. Eventually, the detection of defective, rejectable - in accordance with the definitions hereinabove - paper packaging product units is being achieved by comparing them with one, or more, standard product units, the compliance of the quality characteristics of which with the prescribed standards has been certified after inspection, i.e. by comparing the electrical signal produced by the photocells of the quality control device in the folding/gluing machine as each such paper packaging product unit to be tested passes through the quality control device with a reference electrical signal of a pulse train that has been previously recorded during scanning of those certified units that are being accepted as standards.

In conclusion, the known prior art enables automatic detection during the manufacturing phase of folding/gluing of the paper packaging product units, namely of the solid and all kinds of corrugated carton boxes used in packaging of food, beverages, pharmaceuticals, cosmetics and cigarettes and of advertising stands and displays made of paper, of those units with inferior print quality or die-cutting characteristics, either because of imperfect alignment of the towers employed in printing each composite color of the printing machine used in the production process or because of imperfect alignment between the towers of the printing machine with the related die-cutting tower used in the production process of the die-cutting machine and because of the complete lack or the extensive alteration of the physical and chemical properties of ink in anyone of the towers involved in the printing process being implemented with the printing machine, such defect being equivalent to a large-scale reduction in the contrast of the color, i.e. in a reduction exceeding fifty percent (50%) of the spot density $D_C$ of the color component of this tower of the printing machine in relation to the theoretically calculated value $D_{TC}$ thereof.

The main drawback of the prior art is the inability thereof to detect small scale differences, i.e. differences in the color contrast of less than twenty percent (20%) of the spot density $D_C$ of each color component of the authentic colored image to be printed in relation to its theoretically calculated value $D_{TC}$, due to: a) the variability in the caliper of the sheet being printed, b) the variability of physical and chemical properties of the ink, which are affected by the stochastic presence of water or solvent content, and c) the variation (tolerance) in the alignment of the towers of the printing machine, as well as due to other, case-specific factors.

Another drawback of the prior art is the requirement of movement at a speed $\vec{v}$ of a constant value and in a direction, by way of example $x$ of the product unit within the folding/gluing machine for achieving recordal of the electrical signal by means of scanning by the photocells of the quality control device, as well as the sensitivity of the measurements relating to the alignment of printing and die-cutting, i.e. the time length of the pulses corresponding to triangular, colored or monochrome symbols, in relation to the variability of the position of the light beam of the photocells on the one hand and of the mobile unit moving along the transversal axes, $y$ and $z$, in the direction of movement, say $x$, of the product unit within the folding/gluing machine. This sensitivity limits the possibilities of clamping the photocells of the quality control device of the folding/gluing machine only in the sector of feeding thereof (pre-folding), wherein the degree of freedom of movement of the paper packaging product units, transversally to the direction of movement thereof, along the axes $y$ and $z$, is almost zero, whilst it calls for a particularly robust mounting of the photocells of the quality control device of the folding/gluing machine at the point of feeding thereof, thereby eliminating the vibrations, such requirement imposing the design and development of mechanical clamping components customized to the type of the folding/gluing machine, thereby increasing the cost of installation and reducing the opportunities for standardization. This sensitivity also prevents application of the method in printing machines or die-cutting machines wherein the detection of defective units is much more efficient as it allows for timely, in advance, detection of systemic production faults, since machines of this type - typically - do not include a sector respectively equivalent to the sector of feeding (pre-folding) of the folding/gluing machines, i.e. a sector in which paper packaging product units or printed sheets of paper move at a constant speed with an almost zero degree of freedom transversally to the direction of motion.

Another disadvantage of the prior art is that the relative location of each electrical pulse with respect to the start of the electrical signal on the one hand and the time duration on the other hand is inversely proportional to the speed of the paper packaging product unit to be scanned. Thus, the implementation of the quality control methods of paper packaging product units requires continuous monitoring of the speed of the folding/gluing machine, which in turn requires - typically - the installation of position rotary encoders and the design and development of mechanical clamping components of such encoders customized to the type of the folding/gluing machine, thereby increasing the cost of installation and reducing the opportunities for standardization.

Another drawback of the prior art is the large geometric dimension of the colored or monochrome - preferably black - symbols of the one-dimensional barcode of the PHARMACODE type, which are being printed parallel to the axis of movement, say $x$, of the paper packaging product units within the folding/gluing machine along the sidelines of the printing layout, at a white background, invisible to the end user/consumer and - preferably - along the gluing zone of the paper packaging product, such large geometric dimension being required by the methodology of measurement so as to allow for the detection of these symbols during operation of the folding/gluing machine at the standard speed thereof, i.e. at a speed of the order of three millimeters per millisecond (3 mm/ms). Given the limitation of the minimum duration in the detection of electrical pulses set by standard automation systems (PLC) and photocells, the minimum geometric dimension parallel to the axis of movement, say $x$, of the paper packaging product units is typically specified at one thousandth of a second, whilst the distance between the symbols is being specified at a value of three millimeters. Given also the fact that the methodology does for the proper functioning thereof require printing of at least ten symbols, the minimum geometric dimension parallel to the axis of movement, say $x$ of the paper packaging product is prescribed at a minimum value of thirty millimeters (30 mm).

Another drawback of the prior art is its inability to detect imperfect alignment in the printing or in the die-cutting due to rotational displacement of the relevant points of reference around an axis perpendicular to the surface of the sheet of paper being printed in the vicinity of the printed symbols.

## SUMMARY OF THE INVENTION

The present invention discloses a method and device for the implementation thereof for the measurement of quality parameters in paper packaging products, namely solid and all kinds of corrugated carton boxes for packaging food, beverages, pharmaceuticals, cosmetics and cigarettes, and promotional paper stands and displays, such quality parameters characterizing the degree of conformity to a certified standard in the performance of the printing and the die-cutting processes, in which a raw material of solid or corrugated, primary or recycled, one or multi-ply, bleached or colored, sheets of paper are being processed into these products by automatic or non-automatic printing machines (lithography, rotogravure) and die-cutting machines respectively.

In particular, an object of the present is to disclose a method and device for the implementation thereof, which on the one hand controls the fidelity of printing - typically four or six - colors constituting the authentic colored image to be printed and on the other hand measures the degree of alignment between the monochrome constituent images that are being printed consecutively in the respective towers of the printing machine by means of photographing, decoding and comparison with standard codes of one or more, colored symbols of a two-dimensional barcode of the DATAMATRIX type, with a square or rectangular shape, which symbols are printed along the margins of the printing layout onto a white background, not visible to the end user/consumer, and preferably along the gluing zone of the paper packaging product, wherein each such DATAMATRIX type symbol is being delimited by two solid lines and by two other dotted lines consisting of (m) and (n) points and determinants of a matrix of (2mx2n) cells within the area delimited by these two solid and two dotted lines and wherein each of the abovementioned cells is being characterized dark or light depending on whether the contrast of the color thereof is respectively greater or less than a predetermined threshold value characteristic of the algorithm used in the decoding of the DATAMATRIX type symbol. Thus, printed sheets of paper or paper packaging product units, which are being photographed as they pass through printing machines (lithography, rotogravure) or through die-cutting machines or through folding/gluing machines and which are being provided with non-decodable DATAMATRIX symbols or the content of these symbols is not consistent with standard codes recorded at the beginning of the manufacturing process, are considered defective and are consequently rejectable, either because of possible shortage, or large-scale alteration of the physical and chemical properties of the composite colors of printing or of the parameters thereof, which respectively causes a large scale reduction of the spot density and consequently of the contrast thereof, either due to imperfect alignment between the monochrome, constituent images being printed sequentially in the relevant towers of the printing machine. According to the above, the detection of defective, rejectable - in accordance with the definitions hereinabove - printed sheets of paper or paper packaging product units is being achieved by comparing the same with one or more printed sheets of paper or one or more, standardized product units, the compliance of the quality characteristics of which to the prescribed standards has been certified after inspection, i.e. by successful decoding of the DATAMATRIX symbols that have been photographed as the printed sheets or product units pass through the printing and die-cutting machines or through the folding/gluing machines respectively and comparing them with the content of the standard reference codes that have been decoded and recorded previously, during photographing of said sheets or certified units that are being employed as standards.

It is another object of this invention the disclosure of a variant of the aforementioned method and device for the implementation thereof, which on the one hand controls the fidelity of imprinting of the colors - typically four or six - constituting the authentic, colored image to be printed and on the other hand measures the degree of alignment of the monochrome, constituent images being printed consecutively in the respective towers of the printing machine by means of photographing and decoding and comparison with standard codes of one or more, colored two-dimensional barcode symbols of the DATAMATRIX type, of a square or rectangular configuration, which are being printed along the margin of the printing layout on a white background, not visible to the end user/consumer, and - preferably - along the gluing zone of the paper packaging product, wherein in accordance with this variant of the aforementioned method, on the one hand the two solid and two dotted lines delimiting the DATAMATRIX symbols and on the other hand a number $k < 2 \cdot m \times 2 \cdot n$ of dark cells in these symbols are being printed in brighter or darker derivatives of the constituent colors being printed, which are regulated in a way such as to exhibit an homogeneous contrast, less than or equal to a predetermined threshold value, say $G_T$ of the algorithm being used for decoding.

It is another object of the present invention, the disclosure of variants of the abovementioned methods and devices for the implementation thereof in which one or more colored or monochrome, square or rectangular DATAMATRIX symbols are printed in their negative version, so that on the one hand the white cells are being transformed into dark and vice versa and on the other hand the two solid and two dotted lines delimiting the DATAMATRIX symbols are being printed in white color being hemmed by a dark colored margin (Quiet Zone). The disclosed variant has advantages over the aforementioned method in that it can detect a small scale increase in the spot density $D_C$ through marginal increase of the contrast above the threshold value $\hat{G}_T$ of the color components of printing.

It is another object of this invention the disclosure of a method and device for the implementation thereof, which controls the degree of alignment of the printing layout, as imprinted in each printed sheet of paper, with the relevant linear pattern of die-cutting the paper packaging product, as such degree of alignment is achieved in the paper die-cutting process in a machine that uses a die-cutting die, by means of photographing one or more, colored or monochrome two-dimensional barcode symbols of the DATAMATRIX type, of a square or rectangular configuration and measurement of the coordinates of their geometric center or of a point on the outline thereof with respect to a reference system being defined on each photo being received, such DATAMATRIX symbols being printed in the margin of the printing layout in a white background, not visible to the end user/consumer and preferably along the gluing zone of the paper packaging product, wherein these colored or monochrome two-dimensional barcode symbols of the DATAMATRIX type are being photographed sequentially or simultaneously during the passage of printed paper sheets through the die-cutting machines or during the passage of paper packaging product units through folding/gluing machines by one or more digital cameras that are mounted onto these machines and form together with the shooting triggering means, the optical system determining the position of the symbols on each photo being taken, the electromechanical equipment of power supply and support of the above and the associated electronic infrastructure and digital networking thereof, the quality control device disclosed herein.

It is another object of this invention the disclosure of a variant of the aforementioned method and device for the implementation thereof, which controls the degree of alignment of the printing layout, as imprinted in each printed sheet of paper, with the relevant linear pattern of die-cutting the paper packaging product, as such degree of alignment is achieved in the process of paper die-cutting process in a machine that uses a die-cutting die, by means of photographing at least two, colored or monochrome two-dimensional barcode symbols of the DATAMATRIX type, of a square or rectangular configuration and measurement of the coordinates of their geometric center or of a point on the outline thereof with respect to a reference system being defined on each photo being shot, such DATAMATRIX symbols being printed in the margin of the printing layout in a white background, not visible to the end user/consumer and - preferably - along the gluing zone of the paper packaging product, wherein these colored or monochrome two-dimensional barcode symbols of the DATAMATRIX type are being photographed sequentially or simultaneously during the passage of printed paper sheets through the die-cutting machines or during the passage of paper packaging product units through folding/gluing machines by a variant of the abovementioned quality control arrangement in which both the digital cameras and the optical system determining the position of the symbols on each photograph being taken do not provide a calibrated measurement of the coordinates of the DATAMATRIX symbols or provide measurement thereof in another physical dimension, e.g. pixels instead of length, i.e. they provide measurement of the form $a \cdot (x - x_o \; y - y_o)$, where the constant $a$ is an unknown calibration factor.

It is another object of this invention the disclosure of a method and device for the implementation thereof, which controls the degree of alignment of the printing layout, as imprinted in each printed sheet of paper, with the relevant linear pattern of die-cutting the paper packaging product, as such degree of alignment is being obtained in the process of paper die-cutting in a machine that uses a die-cutting die, by means of photographing one or more, colored or monochrome two-dimensional barcode symbols of the DATAMATRIX type, of a square or rectangular configuration and measurement of the coordinates of their geometric center or of a point on the outline thereof with respect to a reference system being defined on each photo being taken, such DATAMATRIX symbols being printed in the margin of the printing layout in a white background, not visible to the end user/consumer and - preferably - along the gluing zone of the paper packaging product, wherein these colored or monochrome two-dimensional barcode symbols of the DATAMATRIX type are being photographed sequentially or simultaneously during the passage of printed paper sheets through the die-cutting machines or during the passage of paper packaging product units through carton product folding/gluing machines by a variant of the abovementioned quality control device in which the digital cameras photograph the DATAMATRIX symbols with a time delay $t_d$ with respect to the time of triggering the camera to shoot, i.e. they provide measurement of the coordinates of the DATAMATRIX symbols of the form $(x - x_o + v_x(t_n) \cdot t_d \; y - y_o + v_y(t_n) \cdot t_d)$, wherein $v_x(t_n), v_y(t_n)$ stands for the components representing the speed at which moves the sheet of paper being printed or the paper packaging product unit along the axes being defined onto a reference system of the photograph being taken at the instant of triggering of the camera to shoot, say $t_n$.

It is another object of the present invention to disclose a method and device for the implementation thereof, which uses in combination, totally or partially the methods being disclosed hereinabove with a scope of simultaneously controlling on the one hand the fidelity of printing the constituent colors of the authentic colored image and the degree of alignment between the monochrome, individual images that make up the same, as attained during lithographic or rotogravure paper printing processes and on the other hand the degree of alignment of the printing layout as imprinted in each printed sheet of paper with the relevant linear pattern of die-cutting of the paper packaging product that is being achieved in the process of paper die-cutting in a machine that uses a die-cutting die.

It is another object of the present to disclose a method and a device for the implementation thereof, which makes use in combination, totally or partially, of the methods disclosed hereinabove to simultaneously control on the one hand the fidelity of printing of the constituent colors that make up the authentic colored image and on the other hand the degree of alignment between the monochrome, individual images that make up the same as such are attained during a lithographic or rotogravure paper printing process and also the degree of alignment of the printing layout, as reflected in each printed sheet of paper with the relative linear pattern of die-cutting of the paper packaging product as such degree of alignment is being achieved during the process of die-cutting in a machine that uses a die-cutting die and further makes use of the decoded code of the DATAMATRIX symbols with a scope of identifying and classifying the product being produced or the content thereof for the intended use.

The disclosed method and device for implementing the same being presented in this invention advantageously overcomes the deficiencies of the prior known state of the art, since it may detect small scale differences, i.e. differences in the contrast of the color less than twenty percent (20%), in the spot density $D_C$ of each component of the authentic colored image to be printed in relation to the theoretically calculated value $D_{TC}$ thereof because of variability in: a) the caliper of the sheet being printed, b) the physical, chemical properties of the ink, which are affected by the stochastic presence of water or solvent content, and c) the variation (tolerance) in the alignment of the towers of the printing machine, as well as because of other, case-specific factors and also it can detect the imperfect alignment, if any, between the monochrome, constituent images, which are being printed consecutively in the respective towers of the printing machine and the alignment of the printing layout with the associated linear die-cutting pattern of the product, without necessitating movement at a speed of constant value and direction of the sheet paper being printed or of the product unit subject to control, thereby allowing installation of the device for the implementation of the method being disclosed within printing machines, die-cutting and folding/gluing machines without position encoders (rotary encoders) through printing at least one DATAMATRIX symbol with overall dimensions less than ten millimeters (10 mm).

## BRIEF DESCRIPTION OF THE DRAWINGS

The present invention is being made apparent to those skilled in the art by reference to the accompanying drawings in which the invention is being depicted in an illustrative manner.

Fig. 1 shows a plan view of an illustrative printing layout for the production of four units of the paper packaging product, namely of paper boxes.

Fig. 2 shows a plan view of the linear pattern of die-cutting the printing layout of Fig. 1.

Fig. 3 shows a detail of an embodiment of the prior art system with one-dimensional barcode system for the detection of quality characteristics in a production line of paper packaging products.

Fig. 4 shows a method of recording an electrical signal of a pulse train through scanning by means of a light beam in the device adapted for the detection of quality characteristics in the production line of paper packaging products of Fig. 3.

Fig. 5 shows the effect on the electrical signal of Fig. 4 of the imperfect alignment of the printing layout with the relevant linear pattern of die-cutting the paper packaging product along the horizontal and vertical axis and the effect thereupon of the lack of one of the constituent colors.

Fig. 6 shows a two-dimensional barcode symbol of the DATAMATRIX type in a device employed in the detection of qualitative characteristics in a production line of paper packaging products according to the present invention.

Fig. 7 shows the effect on the DATAMATRIX symbol of Fig. 6 both of the imperfect alignment in one tower of the printing machine and of the lack of ink in the ink container of this tower.

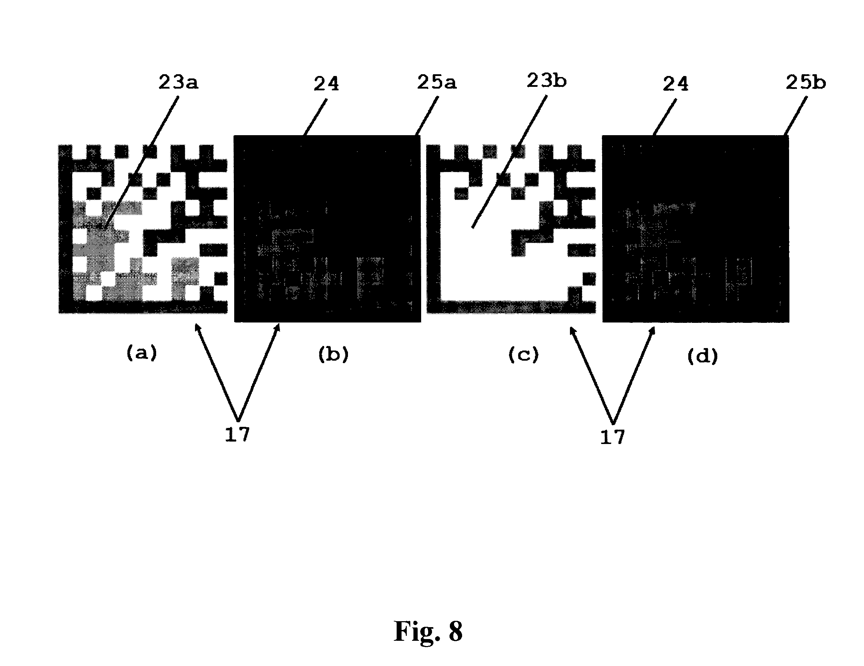

Fig. 8 shows two DATAMATRIX symbols printed in the positive version thereof with color components that have been homogenized so as to exhibit a contrast equal to 30% and two further DATAMATRIX symbols printed in the negative version thereof with color components that have been homogenized to exhibit a contrast equal to 70%.

Fig. 9 shows a detail of the measurement of the geometrical center of a typical DATAMATRIX symbol with respect to a reference system that is being defined in a photographic shot thereof.

Fig. 10 shows an illustrative embodiment of the method disclosed in the present invention in which a colored two-dimensional barcode symbol of the DATAMATRIX type of a square configuration is being printed within the margin of the printing layout in a white background, not visible to the end user/consumer in the five authentic constituent colors employed in printing.

Fig. 11 shows another illustrative embodiment of the method disclosed in the present invention in which a colored two-dimensional bar code symbol of the DATAMATRIX type of a square configuration is being printed within the margin of the printing layout in a white background, not visible to the end user/consumer in five homogenized derivatives of the equivalent authentic constituent colors employed in printing.

Fig. 12 shows another illustrative embodiment of the method disclosed in the present invention in which two colored symbols of a two-dimensional barcode of the DATAMATRIX type of a square configuration is being printed within the margin of the printing layout in a white background, not visible to the end user/consumer in five homogenized derivatives of the equivalent authentic constituent colors employed in printing.

Fig. 13 shows another illustrative embodiment of the method disclosed in the present invention in which a positive and a negative colored symbols of a two-dimensional barcode of the DATAMATRIX type of a square configuration is being printed within the margin of the printing layout, in a white background, not visible to the end user/consumer in six homogenized derivatives of the five authentic constituent colors employed in printing.

Figure 14 shows a hypothetical printed sheet of paper with a printing layout comprising four units of the paper packaging product, which is being photographed as it passes through a printing machine or a die-cutting machine either simultaneously or successively by four digital cameras at the points of gluing of the boxes, wherein the DATAMATRIX symbols have been printed.

## DETAILED DESCRIPTION OF PREFERRED EMBODIMENTS

The process and tools of the invention are disclosed in detail herein below with reference to the illustrative embodiments set forth herein and in the accompanying drawings. However, the method and the tools of the invention can be implemented in many other ways, and their interpretation is not limited in the illustrative embodiments set forth herein. Rather, these embodiments are provided merely with a scope of providing a complete and thorough disclosure of the invention to those skilled in the art.

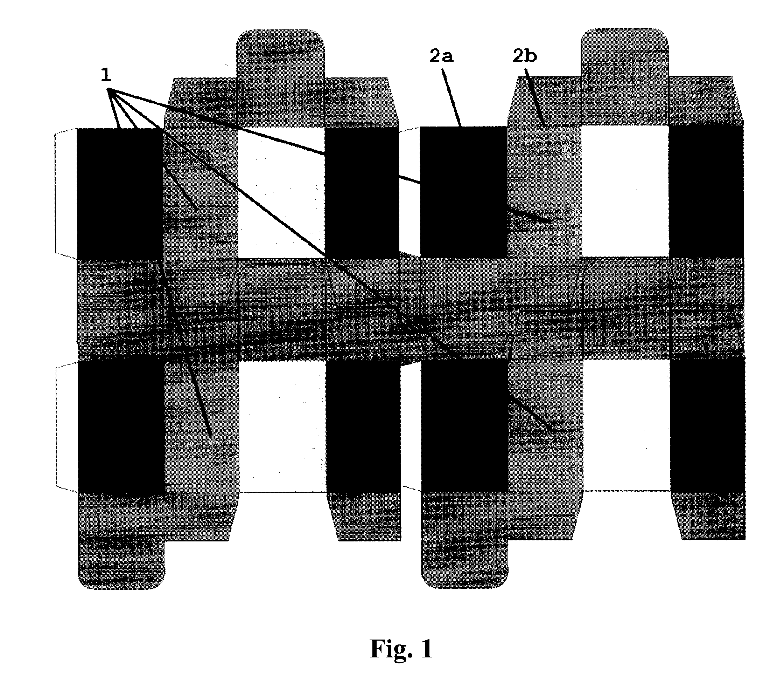

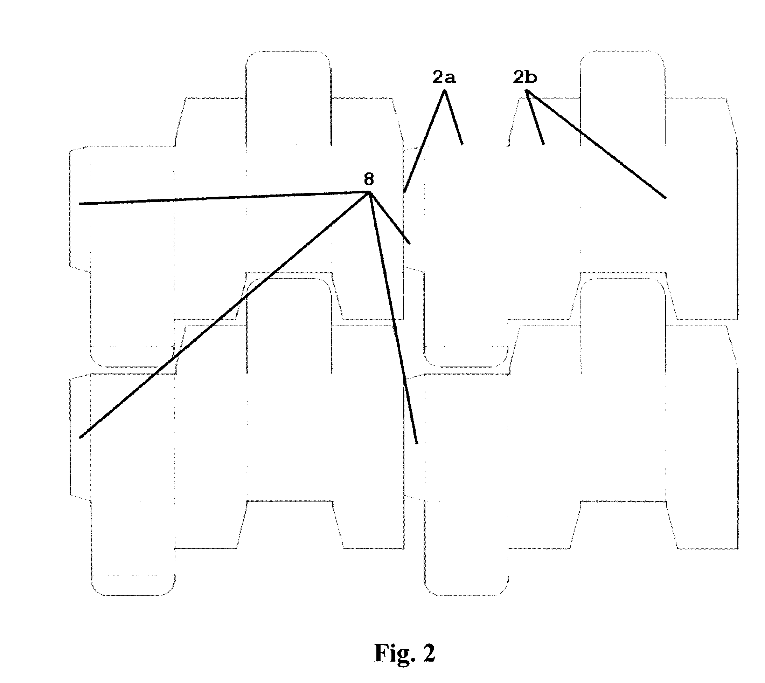

As shown in Fig. 1, an illustrative printing layout as imprinted in each sheet of paper being printed contains four identical units of the paper packaging product 1, i.e. carton boxes, which are being arranged so as to define the relative linear pattern 2 of die-cutting of four units. Fig. 2 shows the same linear die-cutting pattern 2 of the four units of paper packaging product, namely of carton boxes in which the cutting lines are marked by the reference numeral 2a, the folding lines by the reference numeral 2b and the gluing zones of the carton boxes by the reference numeral 8.

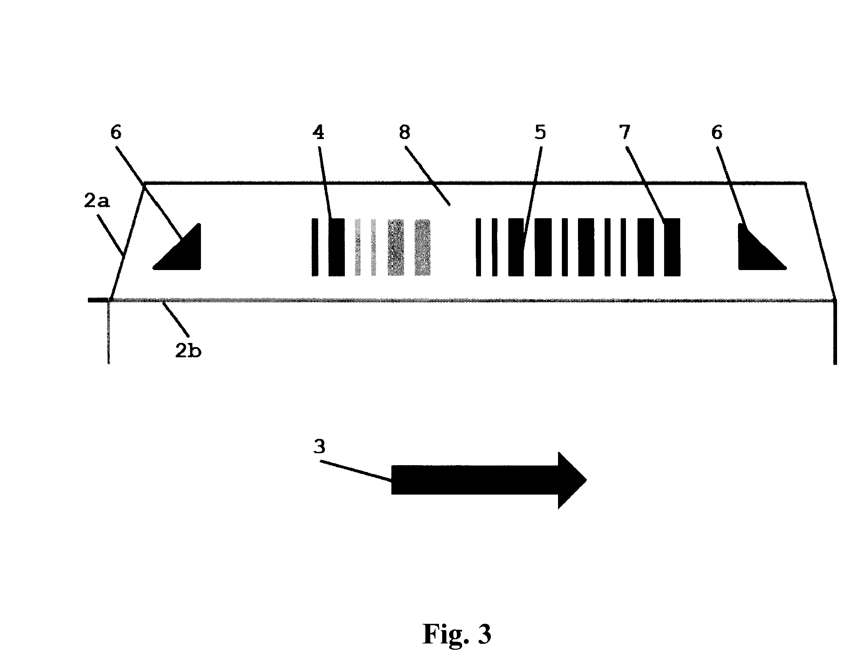

A system is being used in the prior art for the automatic detection of paper packaging product units whose quality is inferior than the relevant standards and for the activation of automatic control systems in order to issue alerts, and - where appropriate - lead to rejection or marking of defective products. Thus as illustrated in Fig. 3 an one-dimensional bar code system is being used for the detection of quality characteristics in a production line of paper packaging products, wherein a series of PHARMACODE colored symbols 4 and monochrome symbols 5, as well as of triangular symbols 6 and rectangular symbols 7 are being printed along the gluing zone 8 of the carton boxes and wherein the above symbols are detected by one or more photocells positioned at suitable points in the folding/gluing machine.

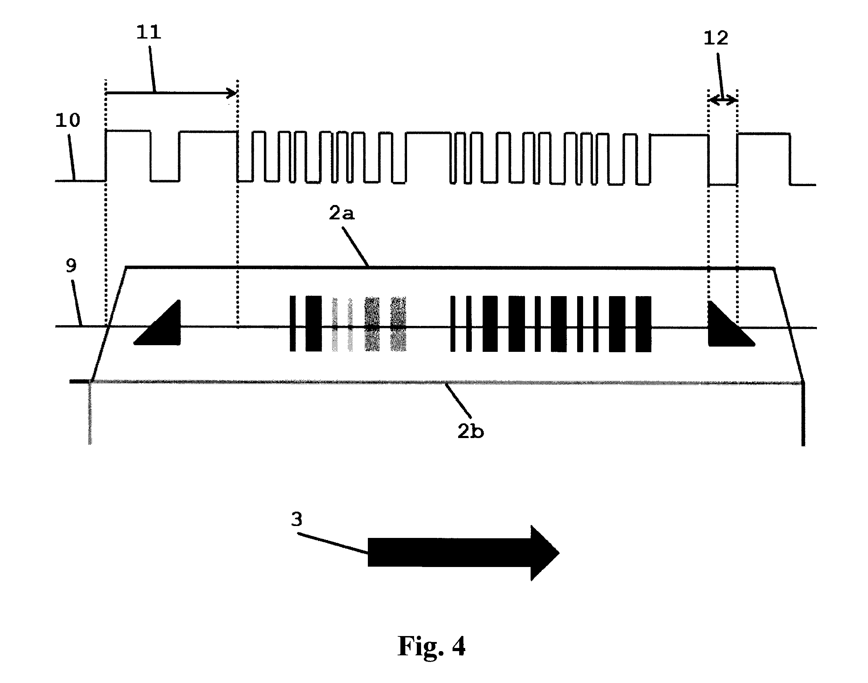

As illustrated in Fig. 4, the above series of symbols, printed onto carton boxes moving into folding/gluing machines at a constant speed along axis 3, is being scanned by one or more constant beams of light 9, preferably laser, of a typically different wavelength, which are emitted by the transmitters of an equivalent number of photocells of the quality control device in the folding/gluing machine and as they are reflected onto the white background of the above symbols are being detected by the respective receivers of the photocells in a manner such as to produce, at the output of the latter, an electrical pulse train signal 10, wherein the position 11 and the width 12 of each pulse depends on the location of the abovementioned triangular and rectangular symbols. Specifically, the relative position 11 of each electrical pulse with respect to the beginning of the electrical signal, i.e. the first front, positive or negative raise - depending on polarity - of the first pulse of the pulse train is proportional to the physical distance of the corresponding symbol in the paper packaging product unit being scanned from the natural boundary thereof and inversely proportional to the speed of the same. Similarly, the time length 12 of each electrical pulse is proportional to the physical dimension of the corresponding symbol of the paper packaging product unit being scanned, parallel to the axis of movement thereof and inversely proportional to its speed. According to the above, the detection of defective, rejectable - in accordance to the previous definitions - paper packaging product units is being achieved by comparing with one, or more, standard product units, the compliance of the quality characteristics of which with the prescribed standards is being certified following inspection, i.e. by comparing the electrical signal generated by the photocells of the quality control device in the folding/gluing machine, as each product unit being examined passes through with a reference electric pulse train that has been previously recorded during scanning of said certified units that serve as accepted standards.

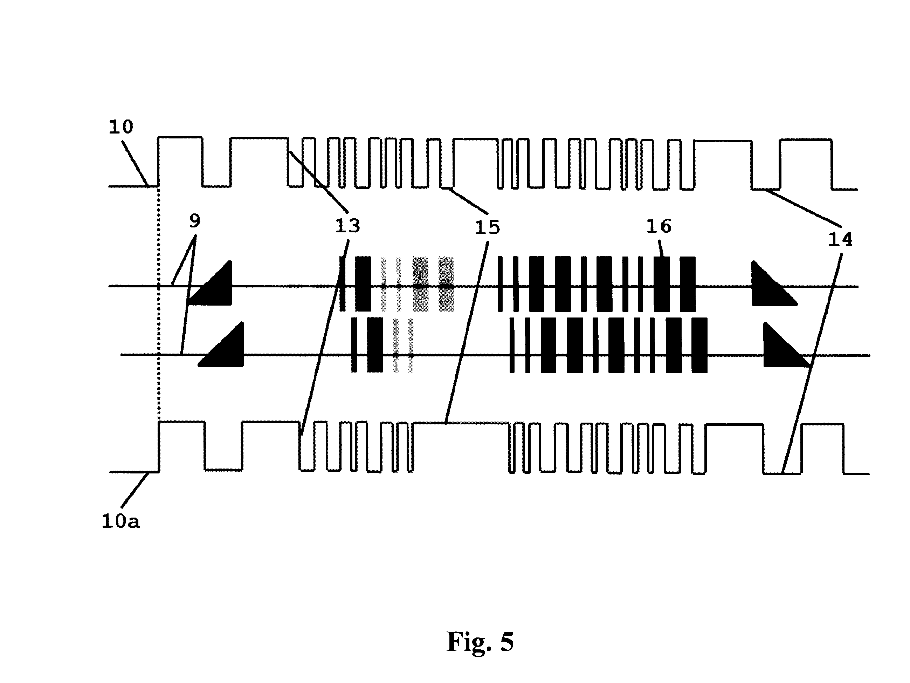

Fig. 5 shows an upper standard electrical pulse train 10 generated by the beam 9 that scans the underlying series of barcode symbols and another lower pulse train 10a being produced by the beam 9 likewise scanning an overlying series of barcode symbols. By comparing the two pulse trains 10 and 10a in conjunction with the series of symbols pertaining to each one of them it becomes apparent the effect on the electrical signal of the imperfect alignment of the printing layout with the relevant linear pattern of die-cutting the paper packaging product along the horizontal and vertical axis and the effect thereupon of the lack of one of the constituent colors.

Specifically, the displacement, relatively to the beginning of the electrical signal 10 that is being produced during the passage of a paper packaging product unit subjected to testing, of the position 13 of a pulse corresponding to a rectangular, monochrome symbol in relation to the standardized position thereof relatively to the beginning of the reference pulse train indicates alteration in the quality of die-cutting due to shift of the point of reference $(x_D\ y_D)$ of the relevant printing press tower in the die-cutting machine in the direction of axis 3, let us assume axis $x$, of the product unit within the folding/gluing machine. Similarly, the change in the time length 14 of a pulse of the electrical signal 10a generated by the passage of a paper packaging product unit subjected to testing is being presented, corresponding to a triangular, monochrome symbol in relation to the standard duration thereof in the reference pulse train 10, such change indicating deterioration in the quality of die-cutting because of the shift of the reference point $(x_D\ y_D)$ of the printing press tower of the die-cutting machine, in an axial movement, say $x$ of the product unit within the folding/gluing machine or along the axis transversal therein, say axis $y$. Consequently, the shift and the change in the duration of a pulse of the electrical signal generated during the passage of one paper packaging product unit subjected to testing, which respectively corresponds to a rectangular and a triangular colored symbol, compared, respectively, with the standard position and duration thereof in the reference pulse train indicates alteration in print quality due to displacement of the reference point in the printing press tower of the printing machine $(x_C\ y_C)$ that prints the color of the colored symbol along the axis of movement, let us assume axis $x$ of the product unit within the folding/gluing machine or along the axis transversal therein, say axis $y$. Finally, the complete lack of a pulse 15 from the electrical signal 10a generated during the passage of one paper packaging product unit under review, which corresponds to a rectangular or triangular, colored symbol and which is incorporated in the reference pulse train 10, indicates a complete lack of or an extensive alteration of the physical and chemical properties of ink in the particular tower of the printing machine that prints the unique constituent color of the defective, imperfect colored symbol, which is equivalent to a large-scale reduction, i.e. a reduction in the contrast of this color exceeding fifty percent (50 %) of the spot density $D_C$ of this color component in relation to its theoretically calculated value, $D_{TC}$. Further to the above, the known state of the prior art allows decoding of the pulses of the electrical signal generated during the passage of a paper packaging product unit through the folding/gluing machine, such pulses corresponding to the aforementioned symbol of the monochrome - preferably black - one-dimensional barcode of the PHARMACODE type as indicated by reference numeral 16, which is printed in the margin of the printing layout of the paper packaging product, in order to identify and classify the product being produced in itself or the content it is intended for.

The disadvantages of the method and device described hereinabove with reference to Figures 3-5 for controlling quality parameters in a production line of carton boxes and similar products of the prior art on the basis of the one-dimensional barcode of the PHARMACODE type, as set forth in the introductory part of the present, have led to the present invention wherein is being described a method and device for the control of quality parameters in a production line of carton boxes and related items on the basis of a two-dimensional barcode of the DATAMATRIX type.

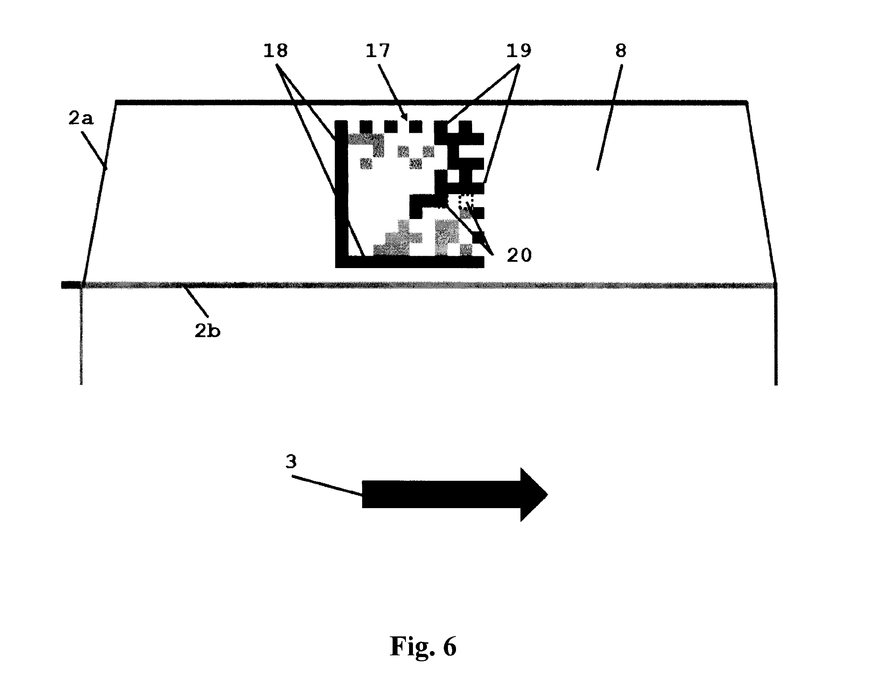

Fig. 6 shows a typical bar code symbol of the DATAMATRIX type 17, as used in the present invention, printed along the gluing zone 8 of an illustrative paper box. As defined in the introductory part of the present, a typical barcode symbol of the DATAMATRIX type 17 is being delimited by two solid (L Finder Pattern) lines 18 and an equivalent number of dotted (Clock Track) lines 19, consisting of, let us assume $m,n$, points respectively, wherein the dotted lines 19 define an imaginary, theoretical rectangular matrix of $2 \cdot m \times 2 \cdot n$ cells, each of which encodes a single digit (bit) of binary information depending on whether the contrast of the color of the cell is larger, whereby the cell being characterized and hereinafter called a dark cell, or less, whereby the cell being characterized and hereinafter called a light cell, from a threshold value, say $G_T$, which is defined and identifies the algorithm used to decode the DATAMATRIX symbol 17 and which in each particular case takes a constant value, say $G_T$, or a value dependent on the average contrast of all the $2 \cdot m \times 2 \cdot n$ cells, i.e. $G_T = max\{a \cdot {}^{\Sigma 2m \times 2n}G_n/2 \cdot m \times 2 \cdot n\ G_{TMIN}\}$ where $G_i$ denotes the contrast of each one of the $2 \cdot m \times 2 \cdot n$ cells, $\alpha$ the scalar factor characteristic of the decoding algorithm, with a typical value $\alpha \approx \frac{1}{2}$ and $G_{TMIN}$ the minimum value of the contrast that can be decoded by the algorithm being used.

In the abovementioned DATAMATRIX symbols of the disclosed method on the one hand each one of said two solid lines 18 and two dotted lines 19 which delimit the DATAMATRIX symbols and on the other hand each one of the, let us assume $k < 2 \cdot m \times 2 \cdot n$, dark cells 20 thereof are being printed with one of the constituent colors of printing, in a manner such that all the constituent colors being printed may be used at an equal - when possible - percentage, i.e. the number of dark cells, let us assume $k_C$, printed in color, say $C$, will - if possible - be equal with $k_C \approx {}^{k}/_{\Sigma C}$, wherein $\Sigma^C$ is the total number of the constituent colors used in the printing process, provided that the contrast of the brightest color component is higher than the aforementioned threshold value, presumably $G_T$, as such is being specified by the decoding algorithm being used. These colored symbols of the two-dimensional barcode of the DATAMATRIX type are being photographed sequentially or simultaneously and are being decoded as the printed sheets of paper pass through printing machines (lithography, rotogravure) or die-cutting machines or as paper packaging product units pass through folding/gluing machines by one or more digital cameras that are being mounted onto said machines and form together with the means for triggering photography, the computational system used to decode the DATAMATRIX symbols and to compare them with standard codes, the electromechanical equipment for the power supply and support of the same, the electronic infrastructure and the digital networking infrastructure, the quality control device disclosed herein.

The functionality of the disclosed method relies on the typical limitation of the algorithms used in decoding two-dimensional barcode symbols of the DATAMATRIX type according to which decoding is only possible if all dark cells of the DATAMATRIX symbol, let us assume $k < 2 \cdot m \times 2 \cdot n$, coincide with the ideal position thereof within the theoretical rectangular matrix of $2 \cdot m \times 2 \cdot n$ cells defined by the two dotted (Clock Track) lines 19, which delimit the DATAMATRIX symbol 17 at an equivalent number of its sides with an accuracy of coincidence higher than one half of the dimension of the cell, i.e. the displacement, let us assume $(\Delta x_i \, \Delta y_i)$, $i \in [0 \; k - 1]$, of each dark cell from the ideal location thereof within the theoretical matrix may take a maximum value of $\Delta x_i \leq {}^{L}/_{(2 \cdot m + 2)}$ and $\Delta y_i \leq {}^{W}/_{(2 \cdot n + 2)}$, wherein $L, W$ are the dimensions of the DATAMATRIX symbol. The functionality of the disclosed method is also dependent upon the ability of the device employed in the implementation thereof to compare the content of the successfully decoded DATAMATRIX symbols with standard codes that have been recorded at the start of a production process, such comparison being considered consistent only if all dark cells of the DATAMATRIX symbol, let us assume $k < 2 \cdot m \times 2 \cdot n$, have been imprinted on the printed sheet of paper in a way such that the contrast thereof is higher than the aforementioned threshold value, let us assume $G_T$, as such is being defined by the algorithm used for decoding. Consequently, the successful decoding of said DATAMATRIX symbols of the method disclosed herein and the subsequent consistent comparison of the content thereof with standard codes recorded at the beginning of the production process necessitates on the one hand a degree of alignment between monochrome, constituent images printed consecutively in the respective towers of the printing machine that lies within the abovementioned limits, i.e. wherein $\Delta x_i \leq L/2 \cdot m$ and $\Delta y_i \leq W/2 \cdot n$, and on the other hand imprinting of the constituent colors making up the authentic colored image being printed with a spot print density, say $D_C$, that is at least enough to ensure a contrast higher than the abovementioned threshold value, say $G_T$, as such is being specified by the decoding algorithm used.

The two-dimensional barcode symbol of the DATAMATRIX type 17 illustrated in Fig. 6 is indicatively provided with fifty-five dark cells, which have been imprinted with the five constituent printing colors and forty-five white cells aligned perfectly within the theoretical matrix defined by the two dashed lines 19, which together with the equivalent number of solid lines 18 delimit the symbol.

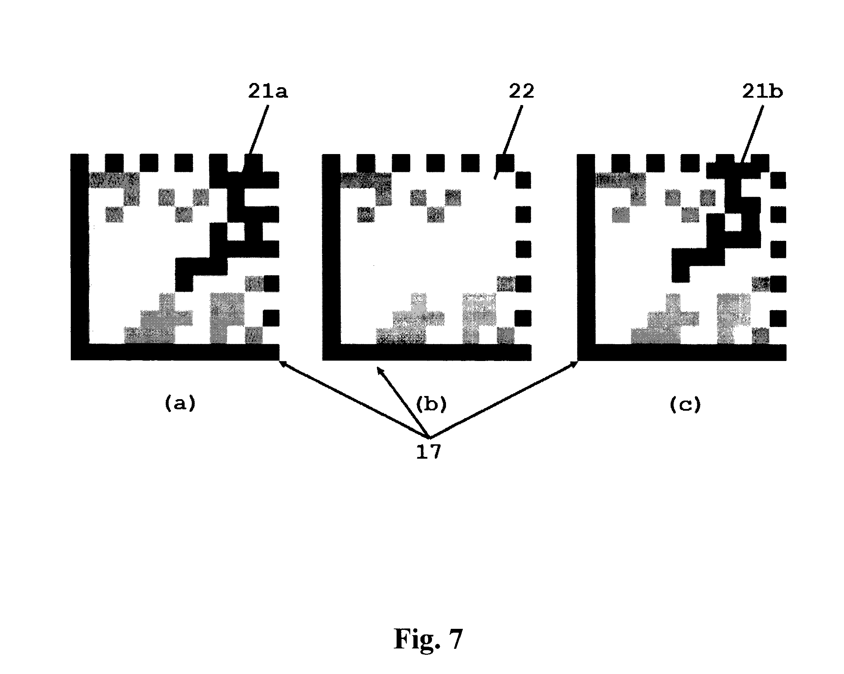

Fig. 7 presents a DATAMATRIX symbol in three successive phases (a), (b), (c) wherein in phase (a) the symbol is correct and a color component thereof comprising a certain array of cells (20) is being denoted by reference numeral 21a. In stage (c) is being presented the effect on the DATAMATRIX symbol 17 of imperfect alignment in a tower of the printing machine, as shown by the shift of abovementioned color component, herein denoted by reference numeral 21b. Further, Fig. 7(b) shows the effect of the lack of ink in the ink container of the same abovementioned printing press tower of the printing machine that is being set to print the color component 21, which is now absent as shown by the white area 22 that has replaced the same. These cases are indicative of erroneous or impossible decoding of the DATAMATRIX symbol 17. In the first case, the symbol can not be decoded, while in the second - even if decoded - the resulting code would be inconsistent with the standard.

According to a variant of the abovementioned method, on the one hand the two solid lines 18 and the two dotted lines 19 which delimit the DATAMATRIX symbols 17 and on the other hand the $k < 2 \cdot m \times 2 \cdot n$ dark cells thereof are being printed with brighter or darker derivatives of the constituent colors of printing, which are being regulated so as to exhibit a homogeneous contrast, that is equal or higher than a predetermined threshold value, say $G_T$, of the decoding algorithm being used. Homogenization of contrast is being achieved on the one hand in the color components whose natural contrast is greater than the threshold value, say $G_T$, by reducing the spot density thereof, say $D_C$, and on the other hand in those components whose natural contrast is greater than the threshold value by mixing them with the darkest color component, i.e. with the component with the highest natural contrast, in relative terms, i.e. with a spot density, such that the contrast of the resulting color is equal to the threshold value. The disclosed variant has advantages over the aforementioned method in that it can detect small scale reduction of the spot density, say $D_C$, by marginal reduction of contrast, below the threshold value, of the color components of printing.

In accordance with another variant of the above method, the DATAMATRIX symbols 17 are being printed in the negative version thereof, whereby on the one hand former white cells are printed with the darkest color component of printing, i.e. with the component exhibiting the highest contrast and on the other hand the former $k < 2 \cdot m \times 2 \cdot n$ dark cells are printed with one of the remaining color components so that all constituent colors of printing are being used at a potentially equal rate, i.e. the number of former dark cells, say $k_C$, printed in color, say $C$, will - when possible - equal to $k_C \approx k/(\Sigma C - 1)$, wherein $\Sigma C$ is the total number of the constituent colors being used in the printing process, provided that the contrast of the darkest one of the remaining other color components, i.e. the second darker component of all color components, is lower than the abovementioned threshold value, say $\hat{G}_T$, as such is being defined by the algorithm being used to decode negative DATAMATRIX symbols and - typically - equals with $\hat{G}_T = 1 - G_T$. Consequently said disclosed variant of the method described hereinabove allows the detection of large-scale alteration of the physical, chemical properties of a certain other color printing components excluding the darkest one, or of the parameters thereof, which causes - respectively - large scale increase of the spot density and consequently of the contrast thereof. The previously designated homogenization technique of the contrast of the remaining other color printing components excluding the darkest one, may be applied in this case too, altered, in that the remaining other - except from the darkest - color components are homogenized so that their contrast is equal or less than the above threshold value, say $\hat{G}_T$. According to these variant embodiments of the invention it is possible to print the DATAMATRIX symbols in their positive or negative version and it is a preferred embodiment of the invention to use pairs of DATAMATRIX symbols 17 printed in their positive and negative version as indicatively shown by the pairs of symbols (a) - (b) and (c) - (d) in Fig, 8, wherein the two DATAMATRIX symbols 17 illustrated in (a) and (c) are printed in their positive version with color components, which have been subjected to homogenization so as to exhibit a contrast equal to 30%, whilst the other two DATAMATRIX symbols 17 illustrated in (b) and (d) are printed in their negative version with color components that have undergone homogenization so as to exhibit a contrast equal to 70%. It is evident from these figures also that a small-scale reduction in the contrast of a color component 23a in (a) to 23b in (c), respectively, or an increase in the contrast of a color component 25a in (b) to 25b in (d), as long as such increase or decrease lies beyond the threshold values renders it impossible to decode the DATAMATRIX symbols.

According to a further embodiment of the present invention the herein disclosed device is being arranged to control the degree of alignment of the printing layout, as such is being imprinted in each printed sheet of paper, with the relevant linear pattern of die-cutting the paper packaging product, as such degree of alignment is being achieved during the paper die-cutting process in a machine that uses a die-cutting die. This process necessitates photographing of one or more colored or monochrome symbols of a two-dimensional barcode of the DATAMATRIX type, of a square or rectangular configuration and measurement of the coordinates of the geometric center or of a point on the contour thereof in relation to a reference system that is being defined in each photo being taken.

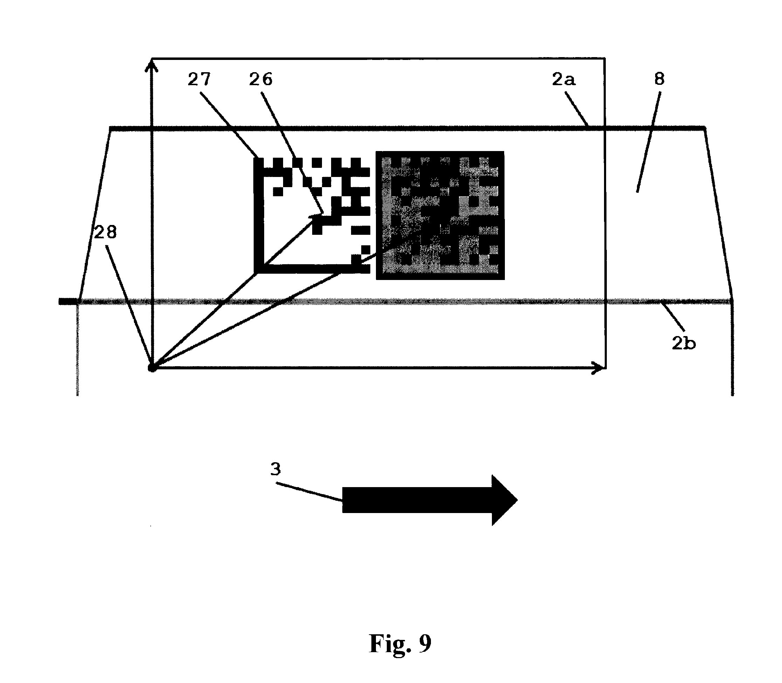

Fig. 9 shows photographic shooting of a pair of DATAMATRIX type symbols 17 that have been printed in their positive and negative version along the gluing zone 8 of a carton box, wherein the position of the geometric center 26 thereof is being measured by a digital method in relation to a reference system that is being defined in each photo being taken, wherein the origin 28 of such reference system is being adjusted to coincide with a fixed point onto the carton box.

The functionality of the disclosed method is dependent on the location of the triggering means, which is being adjusted in a stroboscopic manner, so that the origin of the axes of the reference system that is being defined in each photo being taken will coincide with a standard point 28, let us assume $(x_o \; y_o)$, onto the surface of the printed sheet of paper or of the paper packaging product and on the measurement of the coordinates of the geometric center of the DATAMATRIX symbols contained in the photo being taken or of a certain point 27 on the contour thereof relatively to the reference system, let us assume $(x - x_o \; y - y_o)$, such measurement being compared as to the coincidence thereof with standard reference coordinates recorded at the beginning of the production process. Printed sheets of paper or paper packaging product units which are being photographed as they pass through die-cutting machines or folding/gluing machines respectively and which are being provided with DATAMATRIX symbols whose coordinates of the geometric center or of a point on their contour do not coincide at a sufficient degree, say $|\Delta x| \le \varepsilon_x, |\Delta y| \le \varepsilon_y$, wherein $\varepsilon_x, \varepsilon_y$ represent parameters of the disclosed method, with the standard coordinates recorded at the beginning of the production process, are considered defective and are consequently rejected due to a possible imperfect alignment of the printing layout as such is being imprinted in each printed sheet of paper with the relevant linear die-cutting pattern of the paper packaging product. According to the above, the detection of defective, rejectable - in accordance with the definitions provided hereinabove - printed sheets of paper or paper packaging product units is achieved by comparing them with one or more printed sheets of paper or one or more standard product units, whose compliance of quality characteristics with the prescribed standards has been certified after inspection, i.e. by measuring the coordinates of the geometric center or of a point on their contour of DATAMATRIX symbols being photographed as such printed sheets or product units pass through printing and die-cutting machines or through folding/gluing machines respectively in relation to a reference system that is being defined in each photograph being taken and by comparing them with standard reference coordinates of DATAMATRIX symbols that have been previously recorded during the shooting of these certified sheets or certified units that serve as standards.

The functionality of a variant of the method being disclosed hereinabove in which both the digital cameras and the optical system employed for determining the position of the symbols on each photograph being taken do not provide a calibrated measurement of the coordinates of the DATAMATRIX symbols or they provide measurement in another, instead of the length, physical dimension, say pixels, i.e. they provide measurement of the form $a \cdot (x - x_o \; y - y_o)$, wherein the constant $a$ represents an unknown calibration coefficient, is dependent on the measurement of the coordinates of the geometric center 26 of at least two DATAMATRIX symbols 17 contained in the photograph being taken or of the coordinates of a point on the contour thereof in relation to the aforementioned system of reference, say $a \cdot (x_1 - x_o \; y_1 - y_o)$ and $a \cdot (x_2 - x_o \; y_2 - y_o)$, which measurement is being compared as to the coincidence thereof with reference coordinates of standards that have been recorded at the start of the production process, as in the case of the method disclosed previously, after completion of the mathematical calculation of the aforementioned unknown calibration coefficient derived

from $a = \dfrac{d}{\sqrt{(x_1 - x_2)^2 + (y_1 - y_2)^2}}$, wherein $d$ denotes the known distance, measured in units of length between the two DATAMATRIX symbols that is being defined during the design of the product.

The functionality of another variant of the method disclosed previously, in which digital cameras photograph DATAMATRIX symbols with a time delay, say $t_d$, as to the time of triggering the photographic shooting, i.e. they provide measurement of the coordinates of the DATAMATRIX symbols of the form $(x - x_o + v_x(t_n) \cdot t_d \; y - y_o + v_y(t_n) \cdot t_d)$, where $v_x(t_n), v_y(t_n)$ symbolize components of the velocity of the sheet of paper being printed or of the paper packaging product unit along the axes of the reference system being defined onto each photograph being taken at the instant of triggering shooting, say $t_n$, is dependent on the measurement of the coordinates of the geometric center of one or more DATAMATRIX symbols contained in the photographic shot being taken or of the coordinates of a point on the contour thereof with respect to the abovementioned reference system, say $(x - x_o + v_x(t_n) \cdot t_d \; y - y_o + v_y(t_n) \cdot t_d)$, such measurement being compared as to the coincidence thereof with the average of, say $m \geq 1$, previous measurements of position coordinates of an equivalent number of non-defective printed sheets of paper or paper packaging product units at instants of time $t_{n-1}, t_{n-2}, t_{m-m}$. Printed sheets of paper or paper packaging product units which are being photographed as they pass through die-cutting machines or folding/gluing machines respectively and which are provided with DATAMATRIX symbols whose coordinates of the geometric center or of a point on their contour, do not coincide at a sufficient degree, say

$$\left| \Delta x + \left( v_x(t_n) - \dfrac{\sum_{i=n-1}^{i=n-m} v_x(t_i)}{m} \right) \cdot t_d \right| \leq \varepsilon_x, \quad \left| \Delta y + \left( v_y(t_n) - \dfrac{\sum_{i=n-1}^{i=n-m} v_y(t_i)}{m} \right) \cdot t_d \right| \leq \varepsilon_y, \quad \text{where } \varepsilon_x, \varepsilon_y \text{ are}$$

parameters of the disclosed method with the average of, say $m \geq 1$, previous measurements of position coordinates of non-defective sheets or paper or non-defective paper packaging product units are being considered defective and - consequently - rejectable, due to possible imperfect alignment of the printing layout, as imprinted in each printed sheet of paper with the linear die-cutting pattern of the paper packaging product.

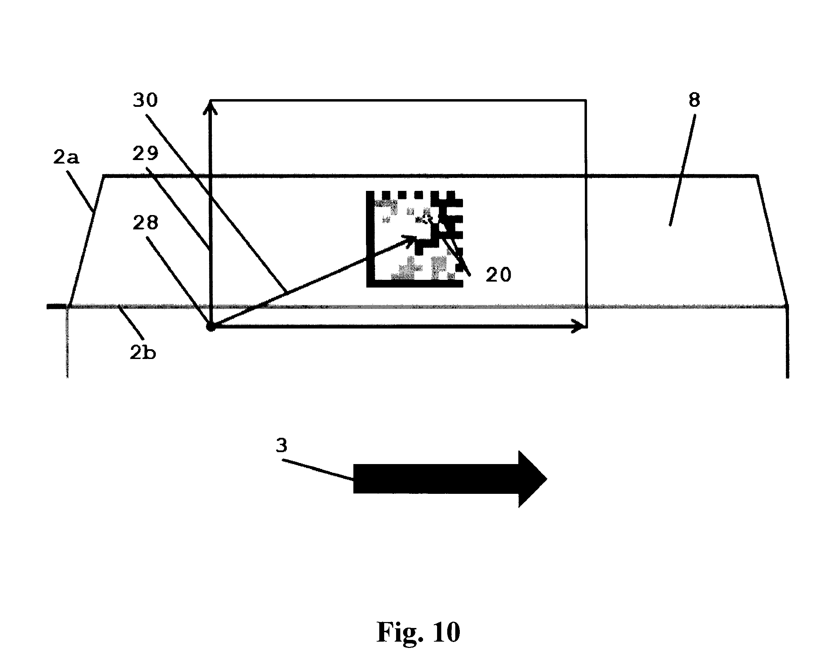

Fig. 10 shows an illustrative embodiment of the method disclosed in the present invention in which a colored symbol 17 of a two-dimensional barcode of the DATAMATRIX type with a square configuration is being printed with the five original color components used in printing within the margin of the printing layout, in a white background, not visible to the end user/consumer, and preferably along the gluing zone 8 of the paper packaging product, wherein this symbol 17 encodes the word «sensap» and is provided with $2 \cdot 5 \times 2 \cdot 5 = 100$ cells, wherein $k = 55$ dark ones of these cells are printed at approximately equal proportion with five colors, i.e. $C_1 = (0\ 0\ 0)$, $C_2 = (255\ 0\ 255)$, $C_2 = (0\ 255\ 255)$, $C_4 = (255\ 255\ 0)$ and $C_5 = (192\ 192\ 192)$ expressed in RGB units, such colors constituting the color components of printing in this illustrative embodiment. This colored DATAMATRIX symbol 17 of each paper packaging product unit is being photographed once and decoded when the unit passes through the folding/gluing machine by a digital camera that is mounted onto the abovementioned machine, such digital camera together with the shooting triggering device, the computational system for: a) decoding the DATAMATRIX symbol, b) measuring the position thereof in relation to a reference system being designated onto the photograph being taken 29 and c) comparing the same with the standard code «sensap», the electromechanical equipment of support and power supply to the above and the electronic digital networking infrastructure constituting the herein disclosed quality control device of this illustrative embodiment. The triggering means of this illustrative embodiment consists of a photocell which detects in a stroboscopic manner the arrival of a paper packaging product unit so that on each photograph 29 being taken, the origin 28 of the reference system thereof coincides with a fixed point, let us say $(x_o \; y_o)$, onto the paper packaging product unit 1.

At the start of the production process, the DATAMATMX symbols of the first, let us say five, paper packaging product units, passing through the folding/gluing machine are being photographed, decoded and the codes thereof, as well as the coordinates of their position 30, let us assume $(x - x_o \; y - y_o)$ on the abovementioned reference system of the photograph 29 being taken are being recorded. As long as the codes of these first, let us say five, units are successfully decoded and found consistent in between them and the coordinates of the position thereof are found exactly coincident, assuming $|\Delta x| \leq \varepsilon_x, |\Delta y| \leq \varepsilon_y$, of the order of $\varepsilon_x = \varepsilon_y = 1mm$, the code - in this case «sensap» - and the recorded position of symbols are henceforth being used as reference standards. The DATAMATRIX symbol of each subsequent paper packaging product unit that passes through the folding/gluing machine is being photographed and decoded. In case that the decoding is not successful or the code is found not agreeable with the standard - in this case «sensap» - or the position of the decoded symbol does not coincide at the appropriate degree, i.e. $|\Delta x| \leq \varepsilon_x, |\Delta y| \leq \varepsilon_y$, with the average of the measurements of position of the five former units, the paper packaging product unit is deemed defective and rejectable.

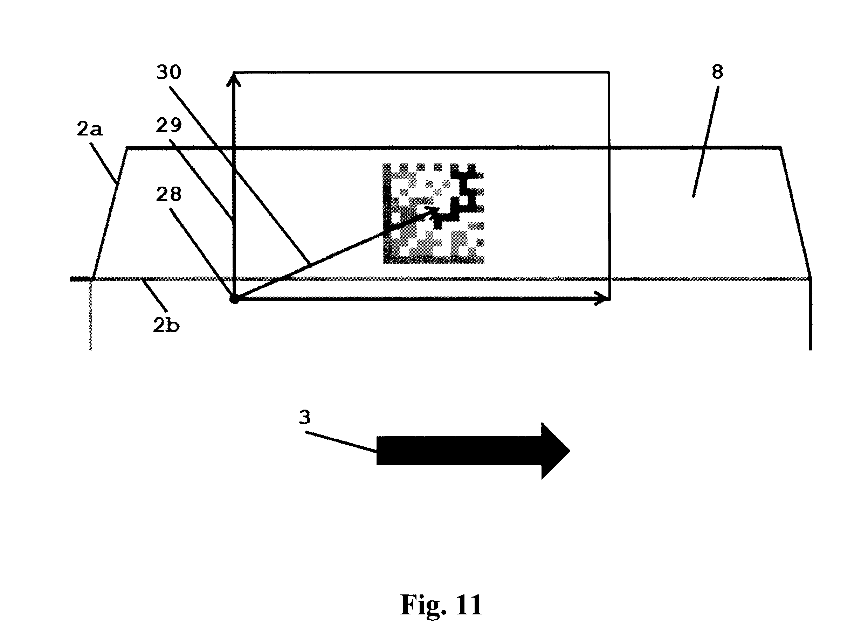

The accompanying Fig. 11 shows another illustrative embodiment of the method disclosed in the present invention in which a colored, two-dimensional bar code symbol 17 of the DATAMATRIX type with a square configuration is being printed within the margin of the printing layout in a white background, not visible to the end user/consumer and preferably along the gluing zone 8 of the paper packaging product, such symbol encoding the word «sensap» and being provided with $2 \cdot 5 \times 2 \cdot 5 = 100$ cells, wherein $k = 55$ dark ones of these cells are printed at approximately equal proportion with five colors, i.e. $C_1 = (178\ 178\ 178)$, $C_2 = (255\ 125\ 255)$, $C_2 = (0\ 255\ 255)$, $C_4 = (204\ 204\ 0)$ and $C_5 = (178\ 178\ 178)$ expressed in RGB units, such colors corresponding to the equivalent number of color components, i.e. $C_1 = (0\ 0\ 0)$, $C_2 = (255\ 0\ 255)$, $C_2 = (0\ 255\ 255)$, $C_4 = (255\ 255\ 0)$ and $C_5 = (192\ 192\ 192)$ of the printing of this illustrative embodiment that have undergone homogenization in order to exhibit a contrast equal to 30%. The homogenization of the color components $C_1$, $C_2$, $C_5$ which have a natural contrast higher than the target value of 30% is being obtained by dilution (raster) of the spot color density $D_C$ of the components. The homogenization of the color component $C_4$ with a natural contrast of 11 % is being obtained by mixing thereof at a percentage of 19% with the color component $C_1$ that has a natural contrast of 100%.

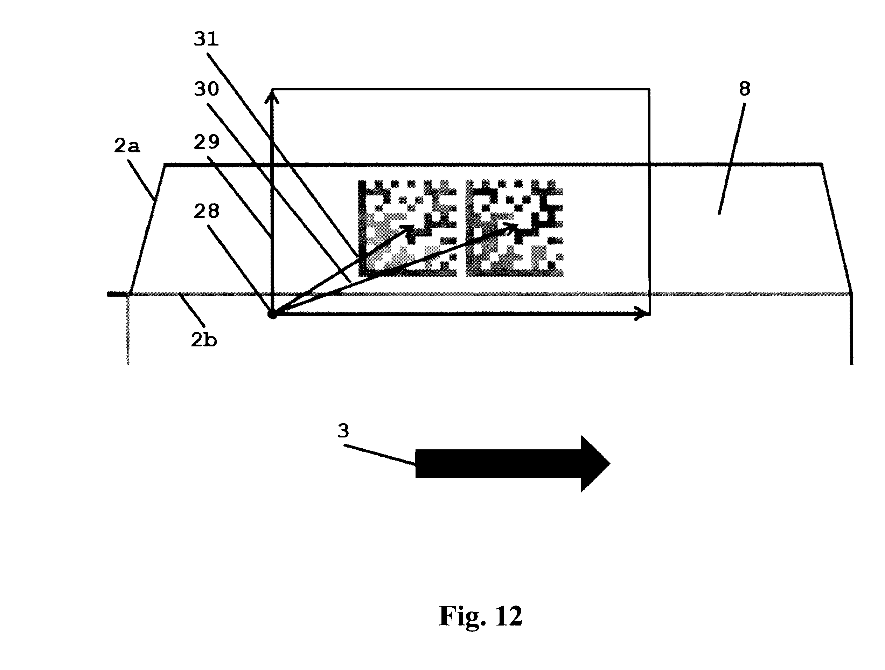

The accompanying Fig. 12 presents another illustrative embodiment of the method disclosed in the present invention in which two colored symbols of a two-dimensional barcode of the DATAMATRIX type with a square configuration are being printed within the margin of the printing layout in a zone of white background, not visible to the end user/consumer and preferably at the gluing zone 8 of the paper packaging product. These symbols encode the word «sensap» and feature $2 \cdot 5 \times 2 \cdot 5 = 100$ cells, wherein $k = 55$ dark ones of these cells are printed at approximately equal proportion with five colors, i.e. $C_1 = (178\ 178\ 178)$, $C_2 = (255\ 125\ 255)$, $C_2 = (0\ 255\ 255)$, $C_4 = (204\ 204\ 0)$ and $C_5 = (178\ 178\ 178)$ expressed in RGB units, which correspond to the equivalent number of color components, i.e. $C_1 = (0\ 0\ 0)$, $C_2 = (255\ 0\ 255)$, $C_2 = (0\ 255\ 255)$, $C_4 = (255\ 255\ 0)$ and $C_5 = (192\ 192\ 192)$ of the printing of this illustrative embodiment and which have undergone homogenization so as to exhibit a contrast equal to 30%. In this illustrative embodiment, the measurement of the position 31 of the second DATAMATRIX symbol is being used for the mathematical calculation of the unknown calibration factor, say $a$, of position measurements of the photographic camera.

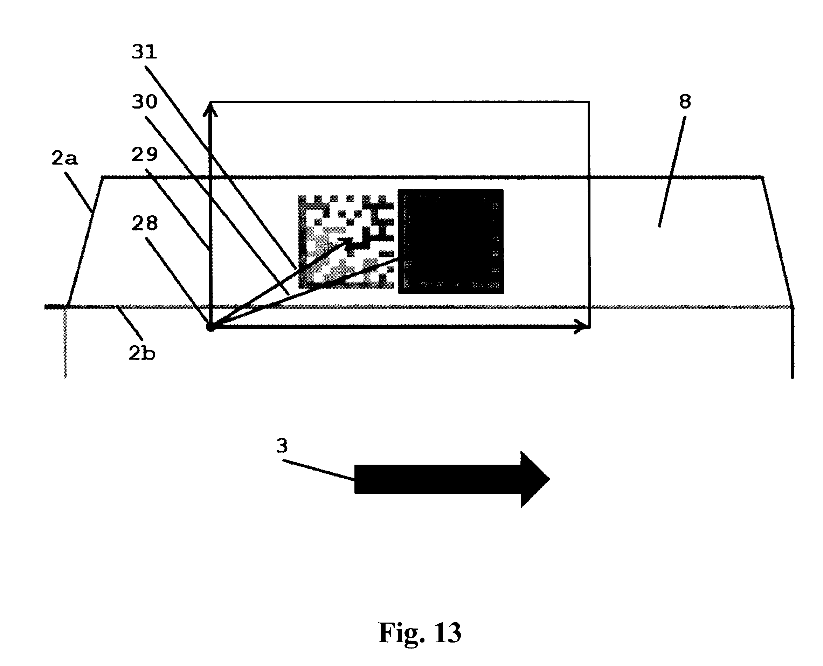

The accompanying Fig. 13 shows another illustrative embodiment of the method disclosed in the present invention in which a positive and a negative colored symbol of a two-dimensional barcode of the DATAMATRIX type with a square configuration is being printed within the margin of the printing layout in a white background, invisible to the end user/consumer and preferably along the gluing zone 8 of the paper packaging product, such symbols encoding the word «sensap» and having $2 \cdot 5 \times 2 \cdot 5 = 100$ cells, which are printed with six colors, i.e. $C_1 = (0\ 0\ 0)$, $C_2 = (184\ 0\ 184)$, $C_2 = (0\ 255\ 255)$, $C_1 = (87\ 87\ 0)$, $C_5 = (178\ 178\ 178)$ and $C_6 = (77\ 77\ 77)$ expressed in RGB units, which correspond to the five color components, i.e. $C_1 = (0\ 0\ 0)$, $C_2 = (255\ 0\ 255)$, $C_2 = (0\ 255\ 255)$, $C_4 = (255\ 255\ 0)$ and $C_5 = (192\ 192\ 192)$ of the printing of this illustrative embodiment and which have undergone homogenization so that the positive symbol will exhibit a contrast equal to 30% and that the negative symbol will exhibit a contrast equal to 70%.

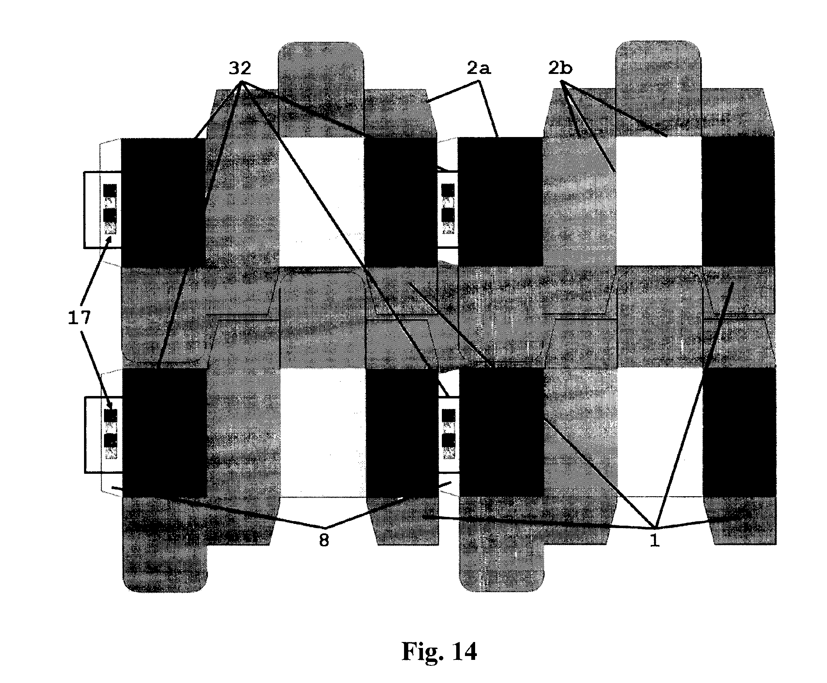

In accompanying Fig. 14 is being presented an illustrative embodiment of the method disclosed in the present invention in which colored, two-dimensional barcode symbols of the DATAMATRIX type 17 with a square configuration are being printed within the margin of the printing layout, by way of example four symbols within each frame 32 of a photographic shot in a white background, invisible by the end user/consumer and preferably along the gluing zone 8 of the paper packaging product 1. These colored DATAMATRIX symbols of each paper packaging product unit are photographed and decoded simultaneously as the printed sheets of paper pass through printing machines (lithography, rotogravure) or die-cutting machines by a number of digital cameras equivalent to the number of product units, in this case four units being printed on the sheet of paper.

In accordance with another version of the illustrative embodiment presented in Fig. 14, the colored DATAMATRIX symbols 17 of each paper packaging product unit are being photographed and decoded sequentially as the printed sheets of paper pass through printing machines (lithography, rotogravure) or die-cutting machines by a number of digital cameras equivalent to the number of columns of product units, in this case two columns, which are being printed on the sheet of paper.

It is hereby noted that it is possible to use the decoded code of the DATAMATRIX symbols in order to identify and classify the product being produced in itself or the content, it is intended for.

## Claims

1. Quality control method in production lines of solid and corrugated carton boxes and advertising displays made of paper, said production line comprising successively arranged lithography or rotogravure printing machines adapted for printing onto sheets of paper one or more pieces of a final paper product, die-cutting machines for cutting the contour of one or more pieces of the final paper product (1) that has been printed on each sheet of paper and folding/gluing machines adapted to forming each of said one or more pieces into a final paper product (1) of a solid or corrugated carton box or advertising display made of paper, wherein quality control comprises control of at least one of the quality parameters that characterize the degree of conformity to a certified standard relating to performance of printing, wherein the controlled quality parameters include the parameter of printing fidelity of the constituent colors of the authentic colored image and the parameter of the degree of alignment between the monochrome, individual images that compose the same as implemented in the printing process, the method being **characterized in that** it comprises:

photographing colored symbols of a two-dimensional barcode of the DATAMATRIX type (17), which are printed within the margin of the printing layout of each sheet of paper onto which are printed one or more pieces of the paper product (1) being produced, each one of said colored symbols of a two-dimensional barcode of the DATAMATRIX type (17) being delimited by two solid lines (18) and another two dotted lines (19), said two dotted lines (19) consisting of (m) and (n) points and determining a matrix of (2mx2n) cells (20) within the area being defined by said two solid lines (18) and said two dotted lines (19) of each of said colored symbols of a two-dimensional barcode of the DATAMATRIX type (17), each of said cells (20) being described as dark or light depending on whether the contrast of the color thereof is respectively higher or less than a predetermined threshold value characteristic of the algorithm being used in the decoding of the symbol of the DATAMATRIX type (17), wherein the two solid lines (18) and the other two dotted lines (19) delimiting said DATAMATRIX symbol and the dark ones of said cells (20) are being printed, each, with one of the constituent colors of the colored image of the paper product (1) being produced, and

controlling the parameter of the degree of alignment between monochrome, individual images making up the colored image of the paper product (1) being produced by decoding each one of the photographs taken of the colored symbols of a two-dimensional barcode of the DATAMATRIX type (17), wherein the decoding is only possible if all dark cells of each DATAMATRIX symbol (17) coincide with the ideal position thereof within said matrix of (2mx2n) said cells (20) with an accuracy of coincidence exceeding half of the dimension of cell (20), and/or

controlling the parameter of printing fidelity of the constituent colors of the authentic colored image of the paper product (1) being produced by comparing the successfully decoded DATAMATRIX symbols (17) with standard codes, wherein the comparison is successful only if all dark cells of the DATAMATRIX symbol (17), which have been imprinted onto the printed sheet of paper have a contrast higher than the threshold value characteristic of the algorithm being used in the decoding and all light cells of the DATAMATRIX symbol (17), which have been imprinted onto the printed sheet of paper have a contrast lower than the threshold value characteristic of the algorithm being used in the decoding.

2. Quality control method in production lines of solid and corrugated carton boxes and advertising displays made of paper, according to claim 1, which method is **characterized in that** it further comprises controlling the parameter of the degree of alignment of the printing layout as such is being imprinted onto each printed sheet of paper with the relevant predetermined linear pattern of die-cutting the paper product (1) being produced as implemented through the die-cutting process of the contour imprinted onto each sheet of paper of the printed one or more pieces of paper product (1) being produced and it consists in measuring and comparing with standard coordinates, the coordinates of the geometric center (26) or of a point on the contour (27) of each of the DATAMATRIX symbols (17) with respect to a reference system defined for each photograph (29) being taken, wherein the origin (28) of said reference system is being adjusted in a stroboscopic manner to coincide with a fixed point on the surface of the product units being controlled.

3. Quality control method in production lines of solid and corrugated carton boxes and advertising displays made of paper, according to claim 1 or 2, the method **characterized in that** it includes a step of certification of standard sheets of paper or standard paper packaging product units, comprising:

certifying through inspection of the compliance with prescribed standards of the quality characteristics of one or more printed sheets of paper or of one or more paper packaging product units, and recording standards for reference codes and position coordinates, as such result from successful decoding of said DATAMATRIX symbols (17), which are printed within the margin of the printing layout of certified sheets of paper or certified paper packaging product units hereinafter used as standards, said symbols being photographed during passage thereof through said printing and die-cutting machines or through said folding/gluing machines respectively.

**4.** Quality control method in production lines of solid and corrugated carton boxes and advertising displays made of paper, according to claim 1 or 2, **characterized in that** one or more of the DATAMATRIX symbols (17) are being printed in their positive version, whereby said two solid lines (18) and said other two dotted lines (19) delimiting said DATAMATRIX symbol and the dark ones of said cells (20) are being printed, each with one of the constituent colors of the colored image of the final paper product, and one or more of the DATAMATRIX symbols are being printed in their negative version, whereby on the one hand the light cells are being transformed to dark ones and vice versa and on the other hand the two solid lines (18) and the two dotted lines (19) delimiting said DATAMATRIX symbol (17) are being printed with a light color being hemmed by a dark colored margin (Quiet Zone) (24), wherein on the one hand the former light, now dark, cells, as well as said dark colored margin (Quiet Zone) (24) are being printed with the darkest color component used in printing, i. e. the component with the highest contrast and on the other hand the former dark, now light cells, as well as said two solid lines (18) and two dotted lines (19) are being printed with one of the remaining color components.

**5.** Quality control method in production lines of solid and corrugated carton boxes and advertising displays made of paper, according to claim 4, **characterized in that** on the one hand the dark cells, as well as said two solid lines (18) and two dotted lines (19) of one or more DATAMATRIX symbols (17) that are printed in their positive version and on the other hand the light cells, as well as said two solid lines (18) and two dotted lines (19) of one or more DATAMATRIX symbols (17) that are printed in their negative version are being depicted with derivatives of the constituent colors of the authentic colored image to be printed of the paper product (1) being produced, said derivatives being obtained through reduction of the point density of the constituent colors or through mixing thereof so as to exhibit a homogeneous contrast which in the case of symbols printed in their positive version is equal to, or higher than the threshold value of the decoding algorithm of symbols printed in their positive version and in the case of symbols printed in their negative version is equal to, or lower than the threshold value of the decoding algorithm of symbols printed in their negative version.

**6.** Quality control method in production lines of solid and corrugated carton boxes and advertising displays made of paper, according to claim 1 or 2, wherein said colored symbols of a two-dimensional barcode of the DATAMATRIX type (17) printed within the margin of the printing layout of each sheet of paper onto which are being printed one or more pieces of the paper product (1) being produced, are being printed in a white background, not visible to the end user/consumer, within the margin of the printing layout of each sheet of paper and along the gluing zone (8) of the paper product (1) being produced.

**7.** Quality control method in production lines of solid and corrugated carton boxes and advertising displays made of paper, according to claim 1, wherein said colored, one or more within each frame (32) of a photograph being taken (29), symbols of a two-dimensional barcode of the DATAMATRIX type (17) are being photographed simultaneously or sequentially during passage of the printed sheets of paper through said printing machines (lithography, rotogravure) or through said die-cutting machines or during passage of paper packaging product units through said folding/gluing machines by one or more digital cameras mounted onto said machines.

**8.** Quality control method in production lines of solid and corrugated carton boxes and advertising displays made of paper, according to claim 2, wherein said colored symbols of a two-dimensional barcode of the DATAMATRIX type (17) printed within the margin of the printing layout of each sheet of paper onto which are being printed one or more pieces of the paper product (1) being produced, one or more said symbols within each frame (32) of a photograph being taken (29), are being photographed simultaneously or sequentially during passage of the printed sheets of paper through said die-cutting machines or during passage of paper packaging product units through said folding/gluing machines by one or more digital cameras mounted onto said machines.

**9.** Quality control method in production lines of solid and corrugated carton boxes and advertising displays made of paper, according to claim 2, **characterized in that** the measurement of the coordinates of the position of the DATAMATRIX symbols with respect to a reference system defined on the photograph (29) being taken of the paper product (1) being produced and being subjected to control is compared with the average value of the relevant measurements recorded during the control of the previous one or more units.

**10.** Quality control method in production lines of solid and corrugated carton boxes and advertising displays made of paper, according to claim 2, which requires printing of at least two DATAMATRIX symbols (17) at a known distance in between them, said known distance being used for calibration of said measurements of the coordinates of the geometric center (26) of the DATAMATRIX symbols (17) or of the coordinates of a point (27) on the contour thereof.

**11.** Quality control device in production lines of solid and corrugated carton boxes and advertising displays made of paper, comprising sequentially arranged lithography or rotogravure printing machines adapted for printing onto sheets of paper one or more pieces of a final paper product, die-cutting machines for cutting the contour of one or more pieces of the paper product (1) being produced and folding/gluing machines adapted to forming each of said one or more pieces into a final product of a solid or corrugated carton box or advertising display made of paper, **characterized in that** it comprises:

one or more digital cameras mounted onto said printing machines and/or die-cutting machines and/or folding/gluing machines for photographing, simultaneously or sequentially, during passage through said machines of printed sheets of paper or in the case of folding/gluing machines of paper product units (1) being produced, colored two-dimensional barcode symbols of the DATAMATRIX type (17), printed in a white background, not visible to the end user/consumer, within the margin of the printing layout of each sheet of paper onto which is being printed one or more pieces of the paper product produced, wherein each of said colored two-dimensional barcode symbols of the DATAMATRIX type (17) is being delimited by two solid lines (18) and another two dotted lines (19), said two dotted lines (19) consisting of (m) and (n) points and determining a matrix of (2mx2n) cells (20) within the area delimited by said two solid lines (18) and two dotted lines (19) of each one of said colored two-dimensional barcode symbols of the DATAMATRIX type (17), each of said cells (20) being described as dark or light depending on whether the contrast of the color thereof is respectively higher or less than a predetermined threshold value characteristic of the algorithm being used in the decoding of the symbol of the DATAMATRIX type (17), wherein the two solid lines (18) and the other two dotted lines (19) delimiting said DATAMATRIX symbol and the dark ones of said cells (20) are being printed, each, with one of the constituent colors of the colored image of the final paper product;
one or more triggering arrangements adapted to trigger photographing said colored two-dimensional barcode symbols of the DATAMATRIX type by said one or more digital cameras;
a computational system for decoding the photographs taken of said colored two-dimensional barcode symbols of the DATAMATRIX type and for comparing them with standard codes;
electromechanical equipment for supporting and supplying power to said one or more digital cameras, said one or more photographing triggering arrangements and said computational system of decoding said photographs taken of said colored two-dimensional bar code symbols of the DATAMATRIX type and of comparing them with standard codes, and
electronic digital networking infrastructure of said one or more digital cameras, said one or more photographing triggering arrangements and said computational system of decoding said photographs taken of said colored two-dimensional bar code symbols of the DATAMATRIX type and of comparing them with standard codes.

**12.** Quality control device in production lines of solid and corrugated carton boxes and advertising displays made of paper, according to the above claim 11, **characterized in that** it further comprises a measuring device with an optical system for determining the position of the coordinates of the geometric center (26) or of a point (27) on the contour of said DATAMATRIX symbols (17) with respect to a reference system defined for each photograph being taken, wherein the origin (28) of said reference system is being adjusted in a stroboscopic manner to coincide with a fixed point on the surface of the paper product units (1) being controlled.

1

2a 2b

**Fig. 1**

EP 2 749 417 A1

**Fig. 2**

EP 2 749 417 A1

Fig. 3

Fig. 4

Fig. 5

**Fig. 6**

EP 2 749 417 A1

(a)　　　　　　　　(b)　　　　　　　　(c)

Fig. 7

EP 2 749 417 A1

**Fig. 8**

**Fig. 9**

EP 2 749 417 A1

**Fig. 10**

Fig. 11

Fig. 12

Fig. 13

Fig. 14

**Europäisches Patentamt**
**European Patent Office**
**Office européen des brevets**

## EUROPEAN SEARCH REPORT

Application Number

EP 12 38 6025

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2009 012436 A1 (OCE PRINTING SYSTEMS GMBH [DE]) 23 September 2010 (2010-09-23) | 11,12 | INV. B41F33/00 G06K19/06 |
| A | * figures 1,4-6 * <br> * paragraphs [0001], [0005], [0008], [0023], [0024], [0027], [0029] - [0032] * | 1-10 | |
| | ----- | | |
| Y | DE 10 2007 050691 A1 (HOCHSCHULE MANNHEIM [DE]; ROLAND MAN DRUCKMASCH [DE]) 30 April 2008 (2008-04-30) | 11,12 | |
| A | * claims 1,2,8,20 * <br> * paragraph [0053] * | 1-10 | |
| | ----- | | |

TECHNICAL FIELDS SEARCHED (IPC)

B41F
G06K

The present search report has been drawn up for all claims

| Place of search | Date of completion of the search | Examiner |
|---|---|---|
| Munich | 18 June 2013 | Hajji, Mohamed-Karim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 38 6025

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2013

| Patent document cited in search report | Publication date | Patent family member(s) | Publication date |
|---|---|---|---|
| DE 102009012436 A1 | 23-09-2010 | NONE | |
| DE 102007050691 A1 | 30-04-2008 | NONE | |

EPO FORM P0459

For more details about this annex : see Official Journal of the European Patent Office, No. 12/82